# EUROPÄISCHE PATENTSCHRIFT

(11) **EP 3 359 363 B1**
(45) Veröffentlichungstag und Bekanntmachung des Hinweises auf die Patenterteilung: **09.03.2022**
(21) Anmeldenummer: 16784809.2
(22) Anmeldetag: 05.10.2016
(51) Int. Cl.: B29B 11/14, B65D 1/02, B65D 1/46, B29C 49/12, B29C 49/06

(54) **PREFORM ZUR HERSTELLUNG EINES KUNSTSTOFFBEHÄLTERS IN EINEM STRECKBLASVERFAHREN**
PREFORM FOR PRODUCING A PLASTICS CONTAINER IN A STRETCH BLOW MOULDING PROCESS
PRÉFORME POUR LA FABRICATION D'UN RÉCIPIENT EN MATÉRIAU SYNTHÉTIQUE DANS UN PROCÉDÉ D'ÉTIRAGE-SOUFFLAGE

(30) Priorität: 08.10.2015 CH 14622015
(43) Veröffentlichungstag der Anmeldung: 15.08.2018
(73) Patentinhaber: Alpla Werke Alwin Lehner GmbH & Co. KG, 6971 Hard (AT)
(72) Erfinder: DORNBACH, Christian, 6971 Hard (AT)
(74) Vertreter: Bohest AG Branch Ostschweiz
(86) Internationale Anmeldenummer: PCT/EP2016/073781
(87) Internationale Veröffentlichungsnummer: WO 2017/060293

(56) Entgegenhaltungen:
- EP-A1- 1 063 076
- WO-A1-90/04543
- WO-A1-96/24482
- JP-A- 2008 178 994
- US-A1- 2010 304 169

## Beschreibung

Die Erfindung betrifft einen Preform zur Herstellung eines Kunststoffbehälters in einem Streckblasverfahren mit einem länglichen, röhrchenartigen Preformkörper, der an seinem einen Längsende mit einem Preformboden verschlossen ist und dessen anderes Längsende an einen Übergangsbereich angrenzt, an den ein Preformhals anschließt, wobei der Preformboden eine Außenwandung und eine Innenwandung aufweist, die eine Bodendicke begrenzen, wobei der Preformkörper eine Außenwandung und eine Innenwandung aufweist, die eine Wanddicke begrenzen.

Die in der Vergangenheit üblichen Behältnisse aus Weiss- oder Buntblech, aus Glas oder auch aus Keramik werden in zunehmendem Mass von Behältnissen aus Kunststoff abgelöst. Insbesondere für die Verpackung fluider Substanzen, beispielsweise von Getränken, fliessfähigen Lebensmitteln wie z.B. Ketchup, Sugo, Pesto, Saucen, Senf, Mayonnaise und dergleichen, Haushaltsprodukten, Pflegeprodukten, Kosmetika usw., kommen mittlerweile hauptsächlich Kunststoffbehältnisse zum Einsatz. Das geringe Gewicht und die geringeren Kosten spielen sicher eine nicht unerhebliche Rolle bei dieser Substitution. Die Verwendung rezyklierbarer Kunststoffmaterialien, die Verwendung von Biokunststoffen und die insgesamt günstigere Gesamtenergiebilanz bei ihrer Herstellung tragen auch dazu bei, die Akzeptanz von Kunststoffbehältnissen, insbesondere von Kunststoffflaschen, beim Konsumenten zu fördern.

Eine grosse Zahl der heutzutage eingesetzten Kunststoffflaschen und dergleichen Kunststoffbehälter wird in einem Streckblasverfahren hergestellt. Bei diesem Verfahren wird zunächst ein sogenannter Preform von üblicherweise länglicher, röhrchenartiger Gestalt hergestellt, der an seinem einen Längsende mit einem Boden verschlossen ist und am anderen Längsende einen Halsabschnitt mit Mitteln zur formschlüssigen Festlegung eines mit korrespondierenden Eingriffsmitteln ausgestatteten Verschlussteils aufweist. Die Mittel zur formschlüssigen Festlegung eines Verschlussteils können beispielsweise an der Aussenwandung des Halsteils ausgebildete Gewindeabschnitte oder bajonettartige Vorsprünge oder entsprechende Vertiefungen sein. Die Herstellung des Preforms erfolgt meist in einem Spritzgiessverfahren. Es sind jedoch auch alternative Herstellverfahren für Preforms bekannt, beispielsweise Fliesspressen oder Extrusionsblasen. Die Herstellung der Preforms kann zeitlich und/oder räumlich getrennt vom nachfolgenden Streckblasverfahren erfolgen. In einem alternativen Verfahren wird der hergestellte Preform ohne zwischenzeitliche Abkühlung unmittelbar nach seiner Herstellung weiter verarbeitet. Zum Streckblasen wird der Preform in eine Formkavität einer Blasform eingesetzt und durch ein mit Überdruck eingebrachtes Fluid, üblicherweise Luft, in radialer und axialer Richtung aufgeweitet, insbesondere aufgeblasen. Dabei wird der Preform zusätzlich mit einem durch die Halsöffnung des Preforms eingefahrenen Reckdorn in axiale Richtung gereckt. Nach dem Reck-/Blasvorgang wird der fertige Kunststoffbehälter aus der Blasform entformt.

Der ein oder mehrschichtige Preform wird vor dem Streckblasverfahren üblicherweise in einem separaten Spritzgiessverfahren hergestellt. Es ist auch schon vorgeschlagen worden, Preforms in einem Kunststofffliesspressverfahren oder in einem Extrusionsblasverfahren herzustellen. Als Rohstoffe für die Herstellung der Preforms kommen Materialien zur Anwendung, deren Hauptbestandteil, also 90% und mehr, beispielsweise aus PET, PET-G, HDPE, PP, PS, PVC, PEN, Copolymeren der angeführten Kunststoffe, Biokunststoffen wie beispielsweise PLA oder PEF, gefüllten Kunststoffe und/oder Mischungen der genannten Kunststoffe besteht. Die Kunststoffe oder Teile davon können eingefärbt und/oder beschichtet sein. Bedingung für die einsetzbaren Kunststoffe ist ihre Eignung einerseits für das jeweilige Herstellverfahren des Preforms, d.h. für das Spritzgiessen oder das Fliesspressen oder das Extrusionsblasen, und andererseits für das darauf folgenden Streckblasverfahren.

Je nach den spezifischen Anforderungen werden Kunststoffbehälter in unterschiedlichen Bereichen des Behälterhalses, des Behälterkörpers und/oder des Behälterbodens gezielt mit grösseren oder kleineren Wandstärken hergestellt. Derartige Dick- oder Dünnstellen beispielsweise in der Behälterwandung oder im Behälterboden werden üblicherweise durch eine gezielte lokale Erwärmung des Preforms vor der Weiterverarbeitung im Streckblasverfahren erzielt. Dazu wird der Preform beispielsweise in einen Ofen eingesetzt, um ihm das gewünschte Temperaturprofil aufzuprägen. Es sind auch bereits Verfahren bekannt, in denen der Preform zunächst gleichmässig erhitzt wird. Das gewünschte Temperaturprofil wird danach durch ein gezieltes lokales Abkühlen des Preforms erstellt. Beim Streckblasverfahren bilden kühlere Stellen am Preform in der Regel Dickstellen am Kunststoffbehälter, während stärker erwärmte Stellen am Preform üblicherweise zu Dünnstellen am Kunststoffbehälter führen. Alternativ oder zusätzlich kann der Preform während des Streckblasverfahrens innerhalb der Blasform auch gezielt abgekühlt werden, um bedingt durch die temperaturabhängig verschieden grosse Verstreckbarkeit am fertig streckgeblasenen Kunststoffbehälter lokal eine erhöhte oder eine verringerte Wandstärke zu erzielen.

Gerade der Bodenbereich eines Kunststoffbehälters muss unterschiedlichsten Anforderungen gerecht werden. So sollen im Bodenbereich ausgebildete Füsse eine stabile aufrechte Lagerung des befüllten Kunststoffbehälters gewährleisten. Zusätzlich sollen die Füsse bei einem Fall von der Tischplatte entsprechende Widerstandskräfte gegen ein Platzen entwickeln. Entsprechend sollen die Füsse des Kunststoffbehälters, beispielsweise an ihrem Übergang zum Behälterkörper, keine gegenüber ihren Nachbarbereichen geringere Wandstärke aufweisen. Andererseits wird der Behälterboden oft für eine Kompensation von Volumenänderungen innerhalb des Kunststoffbehälters herangezogen, damit der Behälterkörper keine Verformungen erleidet. Durch chemische und physikalische Effekte können in einem streckgeblasenen Kunststoffbehälter nämlich relativ hohe Unterdrücke entstehen, welche den Kunststoffbehälter, beispielsweise eine Kunststoffflasche, optisch nachteilig deformieren können. Dieser Unterdruck entsteht beispielsweise durch das Auskühlen und Zusammenziehen einer heiss in den Kunststoffbehälter abgefüllten Flüssigkeit, wenn der Kunststoffbehälter unmittelbar nach dem Einfüllen gasdicht verschlossen wurde. Auch kann kurz nach dem Abfüllen, beispielsweise durch das Abdampfen der Flüssigkeit, durch Ausgasen des Produktes oder durch eine erhöhte Temperatur des Füllguts im Behälterhals bzw. im Kopfraum des Behälters ein Überdruck entstehen. Nach dem Abkühlen des Behälters kommt es jedoch zumeist zu einem Unterdruck, da die Gase im Kopfraum und das Füllgut selbst durch den Temperaturunterschied ihr Volumen stark verändern, insbesondere verringern. Aber auch unterschiedliche Löslichkeiten bestimmter Gase bei unterschiedlichen Temperaturen bzw. Oxidationsreaktionen des Sauerstoffs mit dem abgefüllten Produkt können zur Entstehung eines Unterdrucks führen. Besonders intensiv ist die Volumenkontraktion beim Phasensprung von Dampf zu Wasser. Wie es bereits erwähnt wurde, führt dieser Unterdruck oft zu einer Deformation des Kunststoffbehälters. Deformierte Flaschen oder Dosen suggerieren dem Konsumenten oft fälschlicherweise eine minderwertige Qualität und werden daher vielfach nicht akzeptiert und verbleiben im Regal.

Um dem Problem einer möglichen Verformung des Behälterkörpers durch Unterdruck bzw. Überdruck innerhalb des Behälters zu begegnen, ist daher schon vorgeschlagen worden, den Boden der Kunststoffbehälter flexibel auszugestalten. Dadurch soll die Funktion der gezielten Deformation durch Unterdruck vom Behälterkörper in den Behälterboden integriert werden. Um einen flexiblen Boden zu erhalten, ist in der WO 2010/058098 A2 beispielsweise vorgeschlagen, den Boden der Blasform während des Blasvorgangs des Kunststoffbehälters ruckartig axial zu verschieben. Dadurch soll der Behälterboden bereichsweise geschwächt und insbesondere in einem Bereich um sein Zentrum gezielt verformt werden. Durch den axial verschiebbaren Boden verteuern sich das Blasformwerkzeug und der Herstellvorgang für den Kunststoffbehälter nicht unerheblich. In der WO 2011/103296 A2 bzw. in der WO 2011/109623 A2 wiederum ist vorgeschlagen, während des Blasvorgangs Rippen und/oder Rillen in den Behälterboden einzuformen, welche durch die gezielte Materialverstärkung bzw. Materialschwächung zur Ausbildung von axial flexiblen Bereichen im Behälterboden führen sollen. Auch diese Lösungsansätze bedingen speziell ausgebildete Blasformen, da beim Streckblasverfahren gerade der Zentrumsbereich des Kunststoffbehälters, in dem die Streckstange den Behälterboden berührt, zu wenig verstreckt wird, und infolgedessen rundum das Material besonders dickwandig ist. Dieser dickwandige Bereich steht wiederum den Bemühungen, im Behälterboden einen flexiblen Bereich auszubilden, entgegen. Den diesbezüglichen Anstrengungen des Stands der Technik ist daher kein grosser Erfolg beschieden bzw. führen sie zu erhöhtem Aufwand in der Gestaltung der Blasformen bzw. in der Prozessführung und damit zu erhöhten Herstellkosten für die Kunststoffbehälter.

In der WO 90/04543 A1 ist ein gattungsgemässer Preform bekannt geworden. Bei diesem Preform ist vorgeschlagen, im Bodenbereich des Preforms Material derart anzuhäufen, dass der Boden der daraus hergestellten Flasche eine gewünschte Materialverteilung aufweist.

In der WO 96/24482 A1 sind Preforms beschrieben, die im Bereich des Preformbodens eine im wesentlichen gleichbleibende Wandstärke besitzen.

US 2010/0304169 A1 offenbart einen Preform nach dem Oberbegriff des Anspruchs 1. EP1063076A1 und JP2008178994A offenbaren Preforms mit Preformboden mit rückspringenden Bereichen auf den Innen- bzw. Aussenwandungen.

Eine mögliche Schwachstelle des Behälterbodens stellt insbesondere auch der Anspritzpunkt des Preforms dar, der sich üblicherweise im Zentrum des Preformbodens befindet. Beim Blasformen, insbesondere Streckblasen des Preforms zu einem Behälter wird dieser nur sehr wenig verstreckt. Dadurch weist der Behälterboden gerade in diesem Bereich eine oftmals nur relativ geringe Festigkeit auf. Diesem Nachteil wird daher vielfach dadurch begegnet, dass der Preformboden mit einer relativ grossen Wandstärke gegenüber den übrigen Preformbereichen ausgebildet wird. Die grossen Wandstärken können zu Problemen bei der Herstellung, insbesondere beim Spritzgiessen des Preforms führen. Ausserdem erhöhen sich durch den grösseren Materialeinsatz die Kosten des Preforms und damit des daraus streckgeblasenen Behälters.

Aufgabe der vorliegenden Erfindung ist es daher, den geschilderten Nachteilen des Stands der Technik abzuhelfen. Es soll eine Preform geschaffen werden, der es ermöglicht, aus ihm einen Kunststoffbehälter blaszuformen, dessen Behälterkörper und Behälterboden eine weitgehend konstante Wandstärke aufweisen.

Die erfindungsgemässe Lösung der vorstehend geschilderten und noch weiteren Aufgaben besteht in einem Preform, der die im Anspruch 1 aufgelisteten Merkmale aufweist. Ein Herstellungsverfahren wird im Anspruch 17 beansprucht. Weiterbildungen und/oder vorteilhafte Ausführungsvarianten der Erfindung sind Gegenstand der abhängigen Patentansprüche.

Gemäß einem Ausgestaltungsbeispiel der Erfindung ist ein Preform zur Herstellung eines Kunststoffbehälters in einem Streckblasverfahren mit einem länglichen, röhrchenartigen Preformkörper vorgeschlagen, der an seinem einen Längsende mit einem Preformboden verschlossen ist und dessen anderes Längsende an einen Übergangsbereich angrenzt, an den ein Preformhals anschließt. Der Preformboden weist eine Außenwandung und eine Innenwandung auf, die eine Bodendicke begrenzen. Ferner weist der Preformkörper eine Außenwandung und eine Innenwandung auf, die eine Wanddicke begrenzen. Eine innere dreidimensional konvex gekrümmte Fläche und eine äußere dreidimensional konvex gekrümmte Fläche sind derart voneinander beabstandet, dass sich der Abstand von ihrem jeweiligen Scheitelpunkt zu dem Preformkörper stetig vergrößert. Eine Erstreckung der Außenwandung des Preformbodens entlang der äußeren dreidimensional gekrümmten Fläche ist durch einen rückspringenden Bereich außerhalb ihres Scheitelpunkts unterbrochen. Zusätzlich oder alternativ ist eine Erstreckung der Innenwandung des Preformbodens entlang der inneren dreidimensional gekrümmten Fläche durch einen rückspringenden Bereich außerhalb ihres Scheitelpunkts unterbrochen.

Unter dem Begriff "stetig" ist im Sinne der Erfindung zu verstehen, dass keine sprunghaften Änderungen der Bodendicken wie Sprünge, Stufen, Absätze, Knicke oder ähnliches vorhanden sind. Rückspringende Bereiche führen zu einer Reduzierung der Bodendicke. Rückspringende Bereiche erstrecken sich in der Regel nicht über den Scheitelpunkt. Unter dem Begriff "konvex" ist zu verstehen, dass sich die kuppelförmige Ausgestaltung des Preformbodens von dem Preformhals weg erstreckt. Unter Scheitelpunkt ist der Schnittpunkt der inneren, respektive der äußeren, dreidimensional konvex gekrümmten Fläche mit der Mittelachse des Preforms zu verstehen. In der Regel erstrecken sich die rückspringenden Bereiche nicht über die Scheitelpunkte. Sollte ein rückspringender Bereich im Scheitelpunkt vorhanden sein, so ist entsprechend ein weiterer rückspringender Bereich außerhalb des Scheitelpunkts vorhanden. Angrenzend an den Preformkörper ist kein rückspringender Bereich vorgesehen. Unter einer "dreidimensional gekrümmten Fläche" im Sinne dieser Erfindung ist zu verstehen, dass jede sich in beliebiger Richtung entlang der Ebene erstreckende Linie eine Kurve ist. Die dreidimensional gekrümmten Fläche kann beispielsweise als Sphäre oder Ellipsoid ausgebildet sein. Die Erstreckung des Preformbodens, des Preformkörpers und des Übergangsbereichs entsprechen dem Behälterboden, dem Behälterkörper und der Behälterschulter. Dies bedeutet, dass der Preformboden an der Stelle endet, an der der Behälterboden endet. Entsprechend bildet der Preformkörper den Behälterkörper und aus dem Übergangsbereich des Preforms wird die Behälterschulter gebildet.

Die Erfindung basiert auf dem Grundsatz, den Preform derart auszubilden, dass ein daraus streckgeblasener Behälter unterhalb des Halsbereichs, also über Behälterschulter, Behälterkörper und Behälterboden, eine weitgehend konstante Wandstärke aufweist. In der Regel ist der Standbereich des Behälterbodens, insbesondere wenn der Standbereich als Behälterfüße ausgebildet ist, der am höchsten verstreckte Bereich und daher in der Regel der dünnste Bereich. Durch die vorgeschlagene stetige Vergrößerung der Bodendicke des Preformbodens hin zum Preformkörper kann mehr Material zum Verstrecken bereitgestellt werden, so dass der Behälterboden des fertig streckgeblasenen Behälters eine Bodendicke aufweisen kann, die im Bereich der Standfläche im Wesentlichen gleich ist dem benachbarten Bereich des Behälterkörpers. Die Materialverteilung am Preform ist demnach von der Formgestaltung und der Grösse des daraus herzustellenden Behälters abhängig. Der Preformboden kann an Bereichen, welche beim streckgeblasenen Kunststoffbehälter als Dünnstellen des Behälterbodens ausgebildet sein sollen, bereits mit einer Wanddickenreduktion versehen sein. Entsprechend können Bodenbereiche des Preforms mit grösseren Wanddicken auch Dickstellen am Behälterboden ergeben. Die Dünnstellen und Dickstellen am Behälterboden sind unter Berücksichtigung des Streckverhältnisses beim Streckblasen gezielt aus entsprechend am Preformboden vorgesehenen wanddickenreduzierten rückspringenden Bereichen herstellbar. Der wenigstens eine wanddickenreduzierte rückspringende Bereich im Preformboden kann beispielsweise derart angeordnet sein, dass beim Streckblasen Material aus angrenzenden dickeren Bereichen "herausgezogen" wird. Insbesondere kann dies zu einer Verringerung der Bodendicke im Bereich des Anspritzpunktes eines spritzgegossenen Preforms führen, indem beim Streckblasen des Preforms Material aus dem Anspritzpunkt "herausgezogen" wird. Beim Streckblasen kann zudem die Bodendicke im Anspritzpunkt gezielt verringert und dadurch der Verstreckungsgrad in diesem Bodenbereich des Preforms erhöht werden. Dies kann Vorteile hinsichtlich der Barriereeigenschaften des Behälterbodens haben und seine Festigkeit verbessern. Zudem kann die Reduktion von unnötigem Kunststoffmaterial im Bereich des Anspritzpunktes beim Streckblasen des Kunststoffbehälters insgesamt eine Materialreduktion erlauben, die sich vorteilhaft auf die Herstellkosten des Kunststoffbehälters auswirken kann.

Gemäß einem weiteren Ausgestaltungsbeispiel der Erfindung kann der Preformboden als eine flache Zerstreuungslinse ausgebildet sein, wobei die Zerstreuungslinse durch die Außenwandung und die Innenwandung des Preformbodens begrenzt ist. Durch die Ausgestaltung als Zerstreuungslinse kann verhindert sein, dass der Preformboden bei einem Zweistufen-Streckblasverfahren in einem Ofen durch die einwirkende Strahlung übermäßig erhitzt wird. Vielmehr kann durch die Ausformung als Zerstreuungslinse geregelt sein, wie hoch der Anteil der reflektierten Strahlung ist, die tatsächlich in den Preformboden eindringt und ihn erhitzt.

Gemäß einem weiteren Ausgestaltungsbeispiel der Erfindung kann sich die Wanddicke von der Bodendicke am Preformkörper bis zum Übergangsbereich stetig verkleinern. Ein Übergang vom Preformboden zum Preformkörper ist frei von einem Absatz oder einem Ansatz. Die Außenwandung und die Innenwandung des Preformkörpers schließen einen Winkel ein, der im Wesentlichen gleich oder größer als 2° ist und kleiner als 90°, bevorzugt kleiner als 15° ist. Die Außenwandung und die Innenwandung sind im Wesentlichen gerade. Im Wesentlichen weist der Preformkörper die Form eines Hohlkegels auf.

Gemäß einem weiteren Ausgestaltungsbeispiel der Erfindung kann die Wanddicke von der Bodendicke am Preformkörper bis zum Übergangsbereich im Wesentlichen konstant ausgebildet sein. Ein Übergang von dem Preformboden zu dem Preformkörper ist auch hier frei von einem Absatz oder einem Ansatz. Die Außenwandung und die Innenwandung des Preformkörpers erstrecken sich im Wesentlichen parallel zueinander. Da jedoch Entformschrägen möglich sein können, sollen hiervon auch Preforms umfasst sein, deren zwischen der Innenwandung und der Außenwandung des Preformkörpers eingeschlossener Winkel kleiner als 2° ist. Damit entspricht die Wanddicke des Preformkörpers im Wesentlichen der Bodendicke am Übergang des Preformbodens zum Preformkörper. Die Außenwandung und die Innenwandung sind im Wesentlichen gerade.

Gemäß einem weiteren Ausgestaltungsbeispiel der Erfindung grenzen an den Preformboden ein erster Teilbereich des Preformkörpers und ein zweiter Teilbereich des Preformkörpers an den ersten Teilbereich und den Übergangsbereich an. Die Wanddicke des ersten Teilbereichs von der Bodendicke am Preformkörper bis zum zweiten Teilbereich ist stetig verkleinert. Die Wanddicke im zweiten Teilbereich ist im Wesentlichen konstant und entspricht im Wesentlichen der Wanddicke des ersten Teilbereichs am Übergang zum zweiten Teilbereich.

Die Übergänge von dem Preformboden zum ersten Teilbereich des Preformkörpers und vom ersten Teilbereich zum zweiten Teilbereich sind frei von Absätzen oder Ansätzen. Ausgehend von der Bodendicke am Übergang zum ersten Teilbereich des Preformkörpers verjüngt sich die Wanddicke des Preformkörpers innerhalb des ersten Teilbereichs stetig bis zum zweiten Teilbereich, um von dort bis zum Übergangsbereich die Wanddicke im Wesentlichen konstant zu halten. Die Außenwandung und die Innenwandung sind im Wesentlichen gerade.

Gemäß einem weiteren Ausgestaltungsbeispiel der Erfindung kann der eine gegenüber der Außenwandung und/oder der Innenwandung des Preformbodens rückspringende Bereich hinterschneidungsfrei ausgebildet sein. Eine Wandstärke des wenigstens einen rückspringenden hinterschneidungsfreien Bereichs ist gegenüber der Bodendicke eines an den hinterscheidungsfreien Bereich angrenzenden Bereichs der Außenwandung und/oder Innenwandung verringert.

Eine Hinterschneidungsfreiheit des wenigstens einen wanddickenreduzierten rückspringenden Bereichs des Preformbodens erleichtert die Herstellung des Preforms und dessen Entformbarkeit. Bei einem beispielsweise spritzgegossenen Preform entfallen daher komplizierte Spritzgiessformen mit Faltkern und/oder mehrteiligen äusseren Formteilen. Es versteht sich, dass die wanddickenreduzierten rückspringenden Bereiche an der Innenwandung und/oder an der Außenwandung des Preformbodens ausgebildet sein können. Der hinterschneidungsfreie Bereich kann als im Wesentlichen punktförmige Vertiefung oder im Wesentlichen punktförmiger Rücksprung oder linienförmige Vertiefung oder linienförmiger Rücksprung ausgebildet sein. Die linienförmigen Vertiefungen können als Nut ausgebildet sein, die beispielsweise hohlkehlförmig, rechteckförmig oder V-förmig ausgebildet ist. Die linienförmigen oder punktförmigen Vertiefungen können voneinander regelmäßig oder unregelmäßig beabstandet sein. Die linienförmigen Vertiefungen selbst können gleich oder ungleich lang sein. Die linienförmigen oder punktförmigen Vertiefungen können auf einer Linie mit einer beliebigen geometrischen Form liegen, wobei die Linie geschlossen, wie beispielsweise ein Kreis, ein Oval oder ein Vieleck, oder offen wie bspw. eine Spirale, sein kann. Ferner kann der Übergang von dem hinterschneidungsfreien Bereich und Rücksprung im Wesentlichen scharfkantig oder gerundet sein. Auch kann sich der Rücksprung zentrisch oder exzentrisch um den Scheitelpunkt erstrecken.

In einer Ausführungsvariante der Erfindung kann vorgesehen sein, dass die Wandstärke des wenigstens einen rückspringenden hinterschneidungsfreien Bereichs eine Mindestwandstärke von etwa 0,7 mm bis etwa 4 mm aufweist. Mit einer derartigen Mindestwandstärke kann den Anforderungen des Spritzgiessverfahrens, welches das am häufigsten für die Herstellung von Preforms eingesetzte Herstellverfahren ist, entsprochen werden. Mit dieser Mindestwandstärke können die am streckgeblasenen Kunststoffbehälter beabsichtigten Dünnstellen und Materialverschiebungen in zufriedenstellendem Masse erreicht werden.. Beispielsweise kann die mit dem rückspringenden Bereich des Preformbodens korrespondierende Mindestdicke des Behälterbodens wenigstens etwa 0,15 mm bis etwa 2,5 mm sein.

Es kann beispielsweise vorgesehen sein, dass der Preform im Preformboden wenigstens einen rückspringenden hinterschneidungsfreien Bereich aufweist, der ringförmig, vorzugsweise kreisringförmig, ausgebildet ist. Gerade bei Kunststoffbehältern mit einem weitgehend rotationssymmetrisch ausgebildeten Behälterboden können auf diese Weise sehr gleichmässige Materialverschiebungen und Ausdünnungen erzielt werden. Ferner kann der ringförmig, vorzugsweise kreisringförmig, rückspringende hinterschneidungsfreie Bereich zentrisch oder exzentrisch zu dem Scheitelpunkt ausgebildet sein.

In einer weiteren Ausführungsvariante des Preforms kann der Preformboden mehrere rückspringende hinterschneidungsfreie Bereiche aufweisen, die wenigstens zu Teil entlang eines geschlossenen Rings im Preformboden angeordnet sind. Diese können alle den gleichen radialen Abstand von dem Scheitel des Preformbodens besitzen. Ein derartig ausgestalteter Preformboden kann beispielsweise zur Herstellung eines Kunststoffbehälters mit einem Behälterboden mit petaloiden Standfüssen vorgesehen sein. Die wandstärkenreduzierten Bereiche des Preformbodens können dann zu Dünnstellen zwischen den petaloiden Standfüssen werden. Die Standfüsse selbst werden aus Bereichen des Preformbodens hergestellt, in denen der Preformboden eine grössere Wandstärke aufweist. Entsprechend können auch die petaloiden Standfüsse Verdickungen aufweisen, die sich vorteilhaft auf deren Steifigkeit auswirken können.

In einer weiteren Ausführungsvariante des Preforms kann der Preformboden mehrere rückspringende hinterschneidungsfreie Bereiche aufweisen. Wenigstens einer der rückspringenden hinterschneidungsfreien Bereiche kann dabei ringförmig ausgebildet sein. Beispielsweise kann ein ringförmiger Bereich um den Anspritzpunkt im Preformboden herum vorgesehen sein, während ein weiterer rückspringender hinterschneidungsfreier Bereich an einer anderen Stelle des Preformbodens angeordnet sein kann, jedoch ohne in den Übergang zum Preformkörper zu ragen. Mit einer derartigen Konfiguration kann beim Streckblasen unnötiges überschüssiges Material aus dem Anspritzpunkt in die umgebenden Bereiche abgezogen werden und am Behälterboden gezielt Ausdünnungen vermieden werden. Hierbei können die rückspringenden hinterschneidungsfreien Bereiche beliebig innerhalb des Preformbodens angeordnet sein.

In einer weiteren Ausführungsvariante des Preforms kann der Preformboden wenigstens zwei ringförmig ausgebildete rückspringende hinterschneidungsfreie Bereiche aufweisen, die konzentrisch im Preformboden angeordnet sind. Ein derartiger Preform kann beispielsweise für die Herstellung eines Kunststoffbehälters mit einem Behälterboden, der einen oder mehrere durch Unterdruck oder Überdruck deformierbare membranartige Bodenbereiche aufweist, herangezogen werden. Hierbei können die zwischen den rückspringenden hinterschneidungsfreien Bereichen des Preformbodens angeordnete Bereiche der Innenwandung und Außenwandung des Preformbodens bei dem streckgeblasenen Behälter besagte membranartige Bodenbereiche ausbilden, die durch scharnierartig ausgebildete Dünnstellen miteinander verbunden sind. Diese scharnierartig ausgebildeten Dünnstellen sind aus den rückspringenden hinterschneidungsfreien Bereichen gebildet. Derartige Behälterböden können eine Deformation des Behälterkörpers bei Unterdruck- oder Überdruckbildung im Behälterinneren verhindern, da sich die membranartigen Bodenbereiche zwischen den scharnierartig ausgebildeten Dünnstellen im Wesentlichen entlang einer Längsachse des Behälters verlagerbar sind. Eine derartige Ausgestaltung kann für eine Heißabfüllung von flüssigen oder pastösen Produkten geeignet sein oder auch für eine Abfüllung von kalten Produkten mit anschließender kurzfristiger Erhitzung.

In einer weiteren Ausführungsvariante kann der Preformboden wenigstens zwei rückspringende hinterschneidungsfreie Bereich aufweisen, die sternförmig angeordnet sind. Hierdurch können beispielsweise die Behälterbodendicken in Zwischenräumen zwischen petaloiden Standfüßen, die in der Regel weniger verstreckt werden als die Standfüße selber, durch die rückspringenden hinterschneidungsfreien Bereiche des Preformbodens an die Behälterbodendicken benachbarter Bereiche angepasst werden. Beispielsweise kann es hierdurch möglich sein, dass der pentaloide Standfuss die gleiche Wanddicke aufweist wie der Zwischenraum.

In einer weiteren Ausführungsvariante kann der Preformboden als Flachboden ausgebildet sein. Mit Hinblick auf die hinterschneidungsfreie Ausbildung der wandstärkereduzierten Bereiche erweist es sich, insbesondere bei deren Anordnung an einer Innenwandung des Preformbodens, als zweckmässig, wenn der Preformboden als ein Flachboden ausgebildet ist. Als Flachboden im Sinne der vorliegenden Patentanmeldung wird dabei ein Preformboden bezeichnet, dessen erster Krümmungsradius an einem Übergangsbereich vom Preformkörper zum Preformboden kleiner ist als ein zweiter Krümmungsradius im übrigen Preformboden. Ein grösster Durchmesser des Preformbodens ist dabei grösser als eine axiale Höhe des Preformbodens, wobei der erste Krümmungsradius kleiner ist als die axiale Höhe des Preformbodens.

Gemäß einem Ausführungsbeispiel der Erfindung erfolgt die Herstellung des Preforms durch Spritzgiessen Fliesspressen oder Extrusionsblasen. Die Herstellung kann auch durch Spritzgiessen Fliesspressen, Extrusionsblasen mit anschliessendem mechanischen Verformen des Preformbodens erfolgen.

Der Preform kann in einer entsprechend ausgebildeten Form mit bereichsweisen und/oder ringförmigen Vorsprüngen ausgebildet werden. Alternativ kann auch ein konventioneller Preform, der üblicherweise einen nicht strukturierten Boden aufweist, durch mechanische Verformung mit den der bzw. den wandstärkereduzierten hinterschneidungsfreien Bereichen versehen werden. Eine an das Spritzgiessen oder Fliesspressen oder sogar Extrusionsblasen anschliessende mechanische Verformung des Preformbodens kann beispielsweise durch Prägen oder auch spanend erfolgen. Der Preform ist einstückig.

Der Preform kann ein oder mehrschichtig ausgebildet sein und aus für das Streckblasverfahren geeigneten Kunststoffen gefertigt sein. Es versteht sich, dass die eingesetzten Kunststoffe auch für den jeweiligen Herstellprozess für den Preform, d.h. entweder Spritzgiessen, Fliesspressen oder Extrusionsblasen, geeignet sein muss. Durch die Mehrschichtigkeit können Barriereeigenschaften des Preforms verbessert werden indem beispielsweise EVOH oder Polyamid zwischen der Innenwandung und Außenwandung des Preforms angeordnet sind.

In einer Variante der Erfindung umfasst der Preform Kunststoffe aus der Gruppe bestehend aus PET, PET-G, HDPE, PP, PS, PVC, PEN, Copolymeren der angeführten Kunststoffe, Biokunststoffen wie beispielsweise PLA, PEF oder PPF, gefüllten Kunststoffen, Kunststoffe mit einem oder mehreren Copolymer(en) und Mischungen der genannten Kunststoffen. Die Eigenschaften der genannten Kunststoffe sind ebenso wie ihre Eignung und Vorteilhaftigkeit für die Herstellung von Kunststoffbehältern unterschiedlichster Bauart bekannt und grösstenteils auch bereits hinlänglich erprobt.

Gemäß einem weiteren Ausgestaltungsbeispiel der Erfindung kann der Preformboden an einer vorbestimmten Stelle einen vorspringenden Bereich aufweisen. Dieser vorspringende Bereich kann als Materialvorrat dienen, wenn das Material zwischen der inneren dreidimensional konvex gekrümmten Fläche und der äußeren dreidimensional konvex gekrümmten Fläche des Preformbodens nicht ausreichen sollte, im Behälterboden eine gleichmäßige Behälterbodendickenverteilung zu erzielen. In Analogie zu den rückspringenden Bereichen können die vorspringenden Bereiche punktförmig oder wulstförmig ausgebildet sein. Der vorspringende Bereich kann außerhalb des Scheitelpunkts ausgebildet sein. Der vorspringende Bereich ragt im Gegensatz zum rückspringenden Bereich über die innere dreidimensional konvex gekrümmte Fläche und/oder die äußere dreidimensional konvex gekrümmte Fläche des Preformbodens hinaus.

Gemäß einem weiteren Ausgestaltungsbeispiel der Erfindung weist ein Kunststoffbehälter mit einem Behälterkörper, dessen eines Längsende mit einem Behälterboden verschlossen ist und dessen anderes Längsende einen Behälterhals auf. Der Kunststoffbehälter ist hergestellt in einem Streckblasprozess aus einem Preform gemäss einem der vorangehenden Ansprüche, wobei der Behälterboden am Übergang zu dem Behälterkörper eine Wanddicke aufweist, die im Wesentlichen gleich oder größer als eine Wanddicke des Behälterkörpers ist. In der Regel stellt der Übergang zwischen Behälterboden und Behälterkörper die Standfläche des Behälters dar, die umlaufend sein kann, wie dies bei dem sogenannten Champagnerboden der Fall ist, oder in Standfüße unterteilt sein, wie dies bei petaloiden Standfüßen der Fall ist. Durch die vorgeschlagene Ausgestaltung des Preformbodens kann der Behälterboden im Übergang, also in der Regel im Bereich der Standfläche, respektive Standfüße, so ausgestaltet sein, dass er dort, wo in der Regel die höchste Verstreckung stattfindet, die gleiche Wanddicke aufweist wie die angrenzenden Bereiche aus dem Behälterboden und aus dem Behälterkörper. Zudem kann bei Bedarf der Preformboden derart ausgestaltet sein, dass besagten Behälterboden im Übergang eine größere Wanddicke aufweist als die angrenzenden Bereiche aus dem Behälterboden und aus dem Behälterkörper. Der Kunststoffbehälter weist ein über seine axiale Erstreckung gemessenes Längsstreckverhältnis von > 1,3 auf. Kunststoffbehälter, die aus dem erfindungsgemässen Preform hergestellt sind, können ein geringeres Gewicht aufweisen, ohne dabei Zugeständnisse an die Steifigkeit oder die Barriereeigenschaften machen zu müssen. Natürlich kann der aus dem vorgeschlagenen Preform streckgeblasene Kunststoffbehälter mit eingangs beschriebenen aus dem Stand der Technik bekannten Technologien kombiniert werden, um den Boden des Kunststoffbehälters noch flexibler zu gestalten, um beispielsweise eine noch größere Volumenänderung nach dem Füllen und Verschließen des Kunststoffbehälters auszugleichen und so noch höhere Fülltemperaturen zu erlauben.

Gemäß einem weiteren Ausgestaltungsbeispiel der Erfindung resultieren bei dem vorgeschlagenen Kunststoffbehälter wenigstens ein rückspringender hinterschneidungsfreier Bereich des Preformbodens in einen wandstärkendünneren Bereich am Behälterboden und wenigstens ein Teilbereich der Außenwandung und/oder Innenwandung des Preformbodens in einen gegenüber dem wandstärkendünneren Bereich wandstärkendickeren Bereich des Behälterbodens. Indem bereits der Preform eine gewisse "Vorgestaltung" des Preformbodens für die am streckgeblasenen Behälterboden erwünschten Dünnstellen und gegebenenfalls Dickstellen aufweist, kann die Materialverschiebung bzw. Materialverteilung beim Streckblasverfahren gezielt gesteuert werden. Der Behälterboden kann beim Streckblasen an den vorbestimmten Bereichen grössere oder kleiner Wandstärken erhalten, unnötige Materialanhäufungen, die zudem wegen einer unzureichenden Verstreckung ungenügende Barriereeigenschaften und/oder Festigkeiten aufweisen können, können auf diese Weise sehr einfach vermieden werden.

Gemäß einem weiteren Ausführungsbeispiel der Erfindung bildet wenigstens ein umlaufender rückspringender hinterschneidungsfreier Bereich des Preformbodens eine scharnierartig ausgebildete Dünnstelle im Behälterboden des Kunststoffbehälters aus, mittels der ein membranartig ausgebildeter Teilbereich des Behälterbodens mit umgebenden Bereichen des Behälterbodens verbunden ist. Hierbei kann der Kunststoffbehälter im Behälterboden wenigstens einen membranartig ausgebildeten Bereich aufweisen, der über scharnierartig ausgebildete Dünnstellen mit umgebenden Bereichen des Behälterbodens verbunden ist. Der membranartige Bereich des Behälterboden weist dadurch eine gewisse axiale Beweglichkeit auf und kann dadurch einen Unterdruck oder einen Überdruck innerhalb des Kunststoffbehälters kompensieren. Dadurch kann eine Verformung des Behälterkörpers vermieden werden.

In einer weiteren Ausführungsvariante des Kunststoffbehälters kann der Behälterboden zwei oder mehrere Bereiche mit reduzierter Wandstärke aufweisen, die konzentrisch oder sternförmig angeordnet sind. Bei konzentrischer Anordnung der Bodenbereiche mit reduzierter Wandstärke können diese dann beispielsweise in einem weiter vom Zentrum entfernten Bereich eine grössere Wandstärke aufweisen als in einem zentrumsnäheren Bereich. Dadurch kann der Behälterboden einen graduell flexiblen Bereich aufweisen. Das bedeutet, dass bei einem Unterdruck im Behälterinneren zunächst beispielsweise ein zentrumnäherer Bereich des Behälterbodens nach innen kippt, während weiter aussen liegende Bereiche erst bei zunehmendem Unterdruck eingezogen werden. Bei einem im Behälter vorhandenen Überdruck kann eine Ausstülpung der flexiblen Bereiche des Behälterbodens in analoger Form erfolgen. Bei einer sternförmig und vorzugsweise symmetrischen Anordnung der Bodenbereiche mit reduzierter Wandstärke bilden diese im Behälterboden scharnierartig ausgebildete Dünnstellen, welche die gewünschte Flexibilität von Sektoren des Behälterbodens, in die der Behälterboden durch die sternförmige Ausbildung der Bodenbereiche mit reduzierter Wandstärke geteilt werden kann, gewährleisten.

In einer weiteren Ausführungsvariante eines aus einem erfindungsgemäss gestalteten Preforms hergestellten Kunststoffbehälters weist der Behälterboden petaloid ausgebildete Standfüsse auf, an denen eine Dickstelle ausgebildet ist. Die Dickstelle weist wenigstens bereichsweise eine grössere Wandstärke auf als ein von den Standfüssen umgebener Bereich des Behälterbodens. Die Standfüsse weisen dabei definiert Dickstellen auf, die einerseits aus einer entsprechenden Gestaltung des Preformbodens resultieren und andererseits eine Folge einer Materialverschiebung beim Streckblasen sind. Derartige Standfüsse weisen gegenüber den auf herkömmliche Weise erzeugten Standfüssen, die oft eine zu geringe Wandstärke besitzen, eine verbesserte Festigkeit und Stabilität auf. Auch sind die Barriereeigenschaften im Bereich der Standfüsse eines aus einem erfindungsgemäss gestalteten Preform hergestellten Kunststoffbehälters verbessert.

Weitere Vorteile und Merkmale der Erfindung ergeben sich aus der nachfolgenden Beschreibung von Ausführungsbeispielen unter Bezugnahme auf die schematischen Zeichnungen. Es zeigen in nicht massstabsgetreuer Darstellung:
- Fig. 1: einen axial geschnittenen Preform für ein Streckblasverfahren mit einem Flachboden. Die Ausführung nach Figur 1 ist nicht Teil der Erfindung;
- Fig. 2: den Preform aus Figur 1 mit einem rückspringenden hinterschneidungsfreien Bereich an einer Außenwandung eines Preformbodens;
- Fig. 3: eine weitere Ausgestaltung eines erfindungsgemässen Preforms mit rückspringenden hinterschneidungsfreien Bereichen an einer Außenwandung eines Preformbodens in axial geschnittener Darstellung;
- Fig. 4: eine weitere Ausgestaltung eines erfindungsgemässen Preforms mit einem rückspringenden hinterschneidungsfreien Bereich an einer Innenwandung eines Preformbodens in axial geschnittener Darstellung;
- Fig. 5: eine Seitenansicht eines aus einem erfindungsgemässen Preform streckgeblasenen Kunststoffbehälters mit einem Behälterboden mit petaloiden Standfüssen;
- Fig. 6: eine axial geschnittene Darstellung eines Kunststoffbehälters hergestellt aus einem Preform des Stands der Technik;
- Fig. 7: eine axial geschnittene Darstellung eines Kunststoffbehälters hergestellt aus einem Preform gemäß Fig. 1;
- Fig. 8: eine axial geschnittene Darstellung einer weiteren Variante eines aus einem Preform gemäß Fig. 3 hergestellten Kunststoffbehälters; und
- Fig. 9: eine vergrößerte Darstellung des Behälterbodens aus Fig. 8 in axial geschnittener Darstellung.

In der nachfolgenden Figurenbeschreibung bezeichnen gleiche Bezugszeichen jeweils gleiche Bestandteile bzw. Komponenten des Preforms bzw. eines daraus streckgeblasenen Behälters.

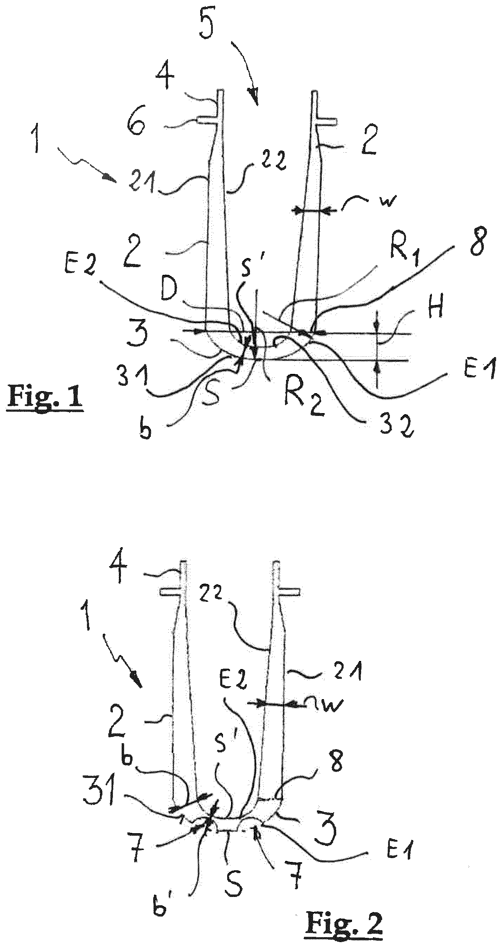

Ein in Fig. 1 dargestellter Preform trägt gesamthaft das Bezugszeichen 1. Die Ausführung nach Figur 1 ist nicht Teil der Erfindung. Der Preform 1 weist einen länglich ausgebildeten Preformkörper 2 auf, dessen eines Längsende mit einem Preformboden 3 verschlossen ist und an dessen anderes Längsende an einen Übergangsbereich 25 angrenzt, an den ein Preformhals 4 mit einer Öffnung 5 anschliesst. Der Preformhals 4 kann an seiner Aussenwandung nicht näher dargestellte Mittel für eine formschlüssige Verbindung mit einem gleichfalls nicht dargestellten Verschluss aufweisen. Derartige Mittel können beispielsweise Gewindegänge, Gewindeabschnitte, Vorsprünge für einen Bajonettverschluss, oder deren entsprechende Gegenstücke in Form von rillenartigen Vertiefungen und dergleichen sein. Der Übergangsbereich 25, der auch Preformschulter genannt wird, und der Preformhals 4 können beispielsweise durch einen radial überstehenden, flanschartigen Transferring 6 voneinander getrennt sein, welcher zum Transport und zur Abstützung des Preforms 1 in einer Streckblasanlage dienen kann. Es versteht sich jedoch, dass der Preform nicht notwendigerweise einen Transferring aufweisen muss. In der Preformschulter 25 weist der Preform 1 eine Wandstärke auf, die bei der Umformung des Preforms 1 in einem Streckblasverfahren zu einem Behälter dazu führt, dass Kunststoffmaterial aus dem Schulterbereich in die übrigen Bereiche des Behälters abgezogen wird. Dadurch kann erreicht werden, dass der Behälterkörper unterhalb des Halsbereichs eine weitgehend konstante Wandstärke aufweist. Die Wandstärkenausbildung und -verteilung in der Preformschulter 25 hängt dabei von der Formgestaltung und Grösse des aus dem Preform 1 herzustellenden Behälters ab. So vergrössert sich die Wandstärke des Preforms 1 im Bereich der Preformschulter 25 vom Preformhals 4 zum Preformkörper 2. Dadurch wird dem Umstand Rechnung getragen, dass die dem Preformhals 4 näheren Bereiche beim Blasformen weniger radial verstreckt werden als die entfernteren Bereiche. Durch die Wandstärkenzunahme vom Preformhals 4 in Richtung des Preformkörpers 2 wird die zunehmend grössere radiale Verstreckung kompensiert. Die aus der Preformschulter 25 streckgeblasene Behälterschulter weist dadurch über ihre axiale Erstreckung weitgehend die gleiche Wandstärke auf.

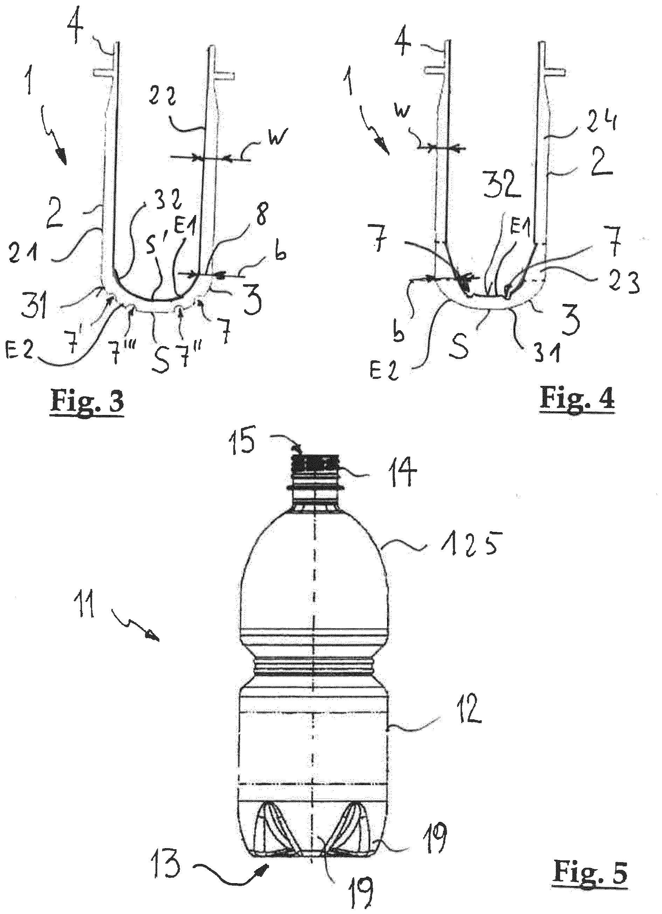

Der das eine Längsende des Preformkörpers 2 verschliessende Preformboden 3 ist gemäss dem dargestellten Ausführungsbeispiel als ein Flachboden ausgebildet. Als ein Flachboden im Sinne der vorliegenden Patentanmeldung wird dabei ein Preformboden 3 bezeichnet, der an einem Übergangsbereich vom Preformkörper 2 zum Preformboden 3 einen ersten Krümmungsradius Ri aufweist, der kleiner ist als ein zweiter Krümmungsradius R₂ des übrigen Preformbodens 3. Ein grösster Aussendurchmesser D des Preformbodens 3, der üblicherweise am Übergang des Preformkörpers 2 zum Preformboden 3 vorliegt, ist dabei grösser als eine axiale Höhe H des Preformbodens 3, die sich axial von einem Scheitelpunkt S des Preformbodens 3 bis zum Übergang des Preformbodens 3 in den Preformkörper 2 erstreckt. Dabei ist der erste Krümmungsradius Ri kleiner als die axiale Höhe H des Preformbodens 3. Der Preformboden 3 besitzt eine Außenwandung 31 und eine Innenwandung 32, die eine Bodendicke b begrenzen. Die Innenwandung 32 erstreckt sich entlang einer inneren dreidimensional konvex gekrümmten Fläche E2 und die Außenwandung 31 erstreckt sich entlang einer äußeren dreidimensional konvex gekrümmten Fläche E1. Die innere dreidimensional konvex gekrümmte Fläche E2 und die äußere dreidimensional konvex gekrümmte Fläche E1 sind voneinander derart beabstandet, dass sich der Abstand von dem Scheitelpunkt S der äußeren dreidimensional konvex gekrümmten Fläche E1 und dem Scheitelpunkt S' der inneren dreidimensional konvex gekrümmten Fläche E2 zu dem Preformkörper 2 stetig vergrößert. Somit vergrößert sich die Bodendicke b stetig von den Scheitelpunkten S, S' zu einem Übergang 8 von dem Preformboden 3 zu dem Preformkörper 2. Dieser Übergang 8 bildet somit die dickste Stelle am Preform 1. Eine Wanddicke w des Preformkörpers 2 wird durch eine Außenwandung 21 und eine Innenwandung 22 des Preformkörpers 2 begrenzt. In dem vorliegenden Ausführungsbeispiel sind die Außenwandung 21 und die Innenwandung 22 des Preformkörpers gerade, wobei sich die Wanddicke w beginnend von dem Übergang 8 von dem Preformboden 3 zum Preformkörper 2 mit der Bodendicke b stetig bis zur Preformschulter 25 verjüngt. Dieser Übergang 8 bildet an einem fertigen streckgeblasenen Behälter 11 auch den Übergang eines Behälterbodens 13 zu einem Behälterkörper 12, wie besser in Figur 5 ersichtlich. Ferner bildet der Preformboden 3 den Behälterboden 13, der Preformkörper 2 den Behälterkörper 12 und die Preformschulter 25 eine Behälterschulter 125.

Fig. 2 zeigt den aus Fig. 1 bekannten Preform 1 mit einem rückspringenden hinterschnittsfreien Bereich 7 an einer Außenwandung 31 des Preformbodens 3. Dieser rückspringende hinterschneidungsfreie Bereich 7 besitzt eine gegenüber einem an den rückspringenden hinterschneidungsfreien Bereich 7 angrenzenden Bereich der Außenwandung 31 reduzierte Bodendicke b'. Im vorliegenden Ausführungsbeispiel erstreckt sich der rückspringende hinterschneidungsfreie Bereich 7 kreisringförmig konzentrisch um den Scheitelpunkt S und von diesem beabstandet.

Auch hier erstreckt sich die Innenwandung 32 des Preformbodens 3 entlang einer inneren dreidimensional konvex gekrümmten Fläche E2 und die Außenwandung 31 des Preformbodens 3 erstreckt sich entlang einer äußeren dreidimensional konvex gekrümmten Fläche E1. Die innere dreidimensional konvex gekrümmte Fläche E2 und die äußere dreidimensional konvex gekrümmte Fläche E1 sind voneinander derart beabstandet, dass sich der Abstand von dem Scheitelpunkt S der äußeren dreidimensional konvex gekrümmten Fläche E1 und dem Scheitelpunkt S' der inneren dreidimensional konvex gekrümmten Fläche E2 zu dem Preformkörper 2 stetig vergrößert. Die Hinterschneidungsfreiheit des rückspringenden Bereichs 7 gewährt eine leichte Entformbarkeit des Preforms aus einer Kavität. Es können aufwändige Faltkerne oder teilbare Werkzeugformen entfallen. Im Fall eines im Spritzgiessverfahren hergestellten Preforms 3 kann der Scheitel S mit dem Anspritzpunkt zusammenfallen. Dieser weist üblicherweise eine produktionstechnisch bedingte grössere Wandstärke auf. Das dort befindliche überschüssige Material wird bei gemäss dem Stand der Technik ausgebildeten Preforms im nachfolgenden Streckblasverfahren kaum ausgedünnt und verstreckt. Entsprechend kann diese unerwünschte Materialanhäufung eine Schwachstelle eines aus dem Preform streckgeblasenen Kunststoffbehälters hinsichtlich Barriereeigenschaften und Festigkeit bilden. Mit einem gemäss Fig. 2 mit einem sich ringförmig um den Scheitel S erstreckenden rückspringenden hinterschneidungsfreien Bereich 7 ausgebildeten Preform 1 kann diesen Nachteilen abgeholfen werden. Beim nachfolgenden Streckblasverfahren wird infolge des rückspringenden hinterschneidungsfreien Bereichs 7 Kunststoffmaterial aus dem Scheitel S, der zugleich den Anspritzpunkt des Preforms 1 bildet, "herausgezogen". Der Preformboden 3 wird somit auch in seinem Scheitel S besser gestreckt. Dadurch können im gesamten Preformboden 3 bessere Barriereeigenschaften und Festigkeiten erzielt werden. Als ein Zusatznutzen kann dabei auch überschüssiges Kunststoffmaterial eingespart werden.

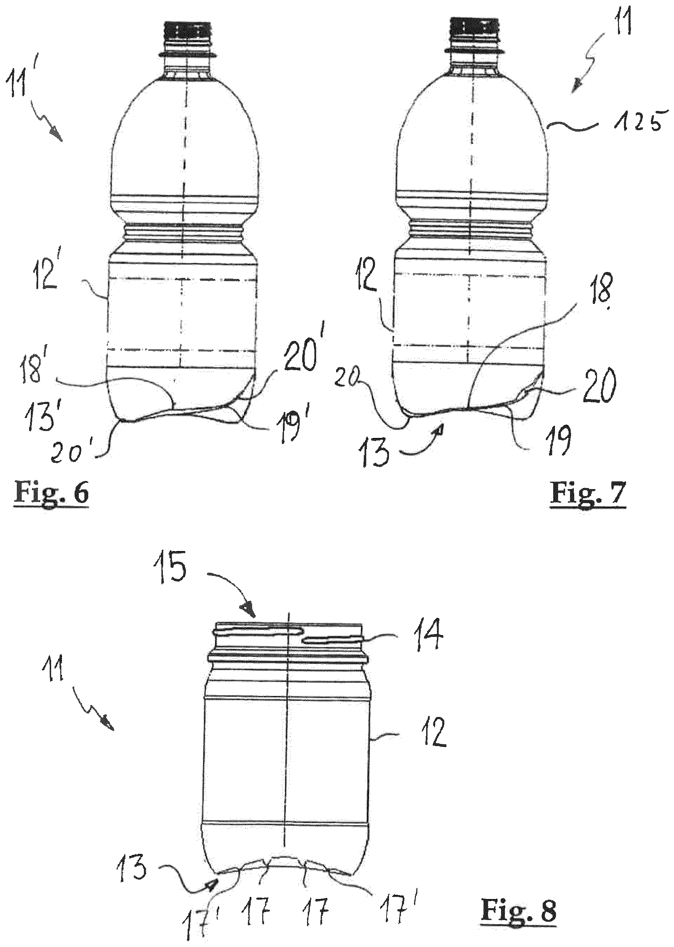

Fig. 3 zeigt ein weiteres Ausführungsbeispiel eines vorgeschlagenen Preforms 1 mit rückspringenden hinterschneidungsfreien Bereichen 7, 7', 7" und 7‴ an der Außenwandung 31 der Preformbodens 3 In der Aussenwandung 31 des Preformbodens 3 ist eine Anzahl von rückspringenden hinterschneidungsfreien Bereichen 7 , 7', 7", 7‴ ausgebildet.. Die rückspringenden hinterschneidungsfreien Bereiche 7 , 7', 7", 7‴ können voneinander isolierte Bereiche sein, die wenigstens zum Teil entlang eines ringförmigen Bereichs des Preformbodens 3 angeordnet sein können. Die derart entlang eines ringförmigen Bereichs des Preformbodens 3 angeordneten rückspringenden hinterschneidungsfreien Bereiche 7 , 7', 7", 7‴ weisen dann den gleichen radialen Abstand vom Scheitel S des Preformbodens 3 auf. Alternativ können die rückspringenden hinterschneidungsfreien Bereiche 7 , 7', 7", 7‴ auch als konzentrische geschlossen umlaufende Rillen oder Nuten in der Aussenwandung 31 des Preformbodens 3 ausgebildet sein, wobei der Scheitel S des Preformbodens beispielsweise im Zentrum angeordnet sein kann. Entsprechend sind dann der rückspringende hinterschneidungsfreie Bereich 7 und der rückspringende hinterschneidungsfreie Bereich 7' sowie der rückspringende hinterschneidungsfreie Bereich 7" und der rückspringende hinterschneidungsfreie Bereich 7‴ jeweils miteinander verbunden. Gerade die Ausformung mit mehreren geschlossen umlaufenden rückspringenden hinterschneidungsfreien Bereichen in der Aussenwandung 31 des Preformbodens 3 führen zu filmscharnierartigen Bereichen in dem Behälterboden, wie in Fig. 8 näher beschrieben ist. Auch können sich die rückspringenden hinterschneidungsfreien Bereiche 7, 7', 7", 7‴ auch sternförmig im Preformboden 3 erstrecken. Die Wanddicke w des Preformkörpers 2 wird durch die Außenwandung 21 und die Innenwandung 22 des Preformkörpers 2 begrenzt. In dem vorliegenden Ausführungsbeispiel sind die Außenwandung 21 und die Innenwandung 22 des Preformkörpers 2 gerade und erstrecken sich im Wesentlichen parallel zueinander bis zur Preformschulter 25. Damit ist die Wanddicke w beginnend von dem Übergang 8 des Preformbodens 3 zum Preformkörper 2 mit der maximalen Bodendicke b im Wesentlichen konstant über den Preformkörper 2 und entspricht damit im Wesentlichen der maximalen Bodendicke b.

Bei dem in Fig. 4 dargestellten weiteren Ausführungsbeispiel des Preforms 1 ist ein rückspringender hinterschneidungsfreier Bereich 7 in einer Innenwandung 32 des Preformbodens 3 ausgeformt. Der rückspringende hinterschneidungsfreie Bereich 7 ist in dem vorliegenden Ausführungsbeispiel ringförmig ausgebildet und wiederum derart gestaltet, dass er hinterschneidungsfrei ist. Dadurch ist eine einfache Entformung des Preforms 1 aus der Form beispielsweise einer Spritzgiessanlage oder eine Fliesspressanlage gewährleistet. Auf kompliziert gestaltete Faltkerne oder dergleichen kann auch hier verzichtet werden. In einer nicht dargestellten Ausführungsvariante des Preforms kann der rückspringende hinterschneidungsfreie Bereich 7 auch in unmittelbarer Nachbarschaft zu dem Scheitel S des Preformbodens 3 in der Innenwandung 32 des Preformbodens 3 vorgesehen sein. Auch hier bildet der Übergang 8 die dickste Stelle am Preform 1. Eine Wanddicke w des Preformkörpers 2 wird durch die Außenwandung 21 und die Innenwandung 22 des Preformkörpers 2 begrenzt. In dem vorliegenden Ausführungsbeispiel sind die Außenwandung 21 und die Innenwandung 22 des Preformkörpers gerade. Die Wanddicke w beginnend von dem Übergang 8 des Preformbodens 3 zum Preformkörper 2 mit der maximalen Bodendicke b verjüngt sich in einem an den Übergang 8 angrenzenden ersten Teilbereich 23, um sich dann im Wesentlichen konstant in dem an den ersten Teilbereich 23 und die Preformschulter 25 angrenzenden zweiten Teilbereich 24 zu erstrecken.

Der erfindungsgemäss ausgebildete Preform ist am Beispiel von Preforms erläutert worden, die einen Flachboden aufweisen. Es versteht sich jedoch, dass die erfindungsgemässe Ausgestaltung des Preforms auch bei einem beispielsweise kuppelförmigen oder bombierten Preformboden vorgesehen sein kann.. Die rückspringenden hinterschneidungsfreien Bereiche können an der Aussenwandung oder an der Innenwandung des Preformbodens vorgesehen sein. Auch eine Kombination von an der Aussenwandung und an der Innenwandung angeordneten rückspringenden hinterschneidungsfreien Bereichen ist möglich. Eine Mindestwandstärke der rückspringenden hinterschneidungsfreien Bereiche im Preformboden beträgt beispielsweise immer wenigstens etwa 0,7 mm bis 4 mm, um den Anforderungen des Spritzgiessverfahrens, welches das am häufigsten für die Herstellung von Preforms eingesetzte Herstellverfahren ist, gerecht zu werden.

Die Herstellung der Preforms mit einem erfindungsgemäss ausgebildeten Preformboden kann beispielsweise beim Spritzgiessen oder beim Fliesspressen erfolgen, indem eine entsprechend ausgebildete Form mit bereichsweisen und/oder ringförmigen Vorsprüngen eingesetzt wird. Alternativ kann auch ein konventioneller Preform, der üblicherweise einen nicht strukturierten Boden aufweist, durch mechanische Verformung mit einem oder mehreren wandstärkereduzierten hinterschneidungsfreien Bereichen versehen werden. Eine an das Spritzgiessen oder Fliesspressen oder sogar Extrusionsblasen anschliessende mechanische Verformung des Preformbodens kann beispielsweise durch Prägen oder auch spanend erfolgen.

Der Preform kann ein oder mehrschichtig ausgebildet sein und aus für das Streckblasverfahren geeigneten Kunststoffen gefertigt sein. Es versteht sich, dass die eingesetzten Kunststoffe auch für den jeweiligen Herstellprozess für den Preform, d.h. entweder Spritzgiessen, Fliesspressen oder Extrusionsblasen, geeignet sein müssen. Dabei kann der Preform PET, PET-G, HDPE, PP, PS, PVC, PEN, Copolymere der angeführten Kunststoffe, Biokunststoffe wie beispielsweise PLA PEF oder PPF, gefüllte Kunststoffe, Kunststoffe mit einem oder mehreren Copolymer(en) und Mischungen der genannten Kunststoffe umfassen. Die Kunststoffe oder Teile davon können eingefärbt und/oder beschichtet sein.

Fig. 5 zeigt schematisch eine Seitenansicht eines streckgeblasenen Kunststoffbehälters, der aus einem oben beschriebenen Preform streckgeblasen ist und gesamthaft das Bezugszeichen 11 trägt. Der Kunststoffbehälter 11 besitzt einen Behälterkörper 12 mit einem Behälterboden 13. Am dem Behälterboden 13 gegenüberliegenden Endes des Behälterkörpers 12 schliesst eine Behälterschulter 125 an, an der sich ein Behälterhals 14 mit einer Ausgiessöffnung 15 anschließt. Der Behälterboden 13 weist beispielsweise eine Anzahl von petaloidförmigen Standfüssen 19 auf. Der Kunststoffbehälter weist ein über seine Achse gemessenes Längsstreckverhältnis von > 1,3 auf. Der Behälterboden 13 besitzt am Übergang zu dem Behälterkörper eine Wanddicke, die im Wesentlichen gleich oder größer als eine Wanddicke des Behälterkörpers 12 ist.

Fig. 6 zeigt einen schematischen Axialschnitt eines Kunststoffbehälters 11', der aus einem Preform des Stands der Technik streckgeblasen ist. Prozessbedingt weist ein Behälterboden 13' in einem zentralen Bereich 18', der bei einem spritzgegossenen Preform etwa dem Bereich um den Anspritzpunkt entspricht, eine Dickstelle auf. An dieser Dickstelle ist der Behälterboden 13' nur unzureichend verstreckt. Andererseits weisen die petaloiden Standfüsse 19' sehr dünnwandige Bereiche 20' auf, die zu einer verringerten Festigkeit des Behälterbodens 13' gegenüber Behälterwandung 12' führen können.

Fig. 7 zeigt eine axial geschnittene Darstellung eines Kunststoffbehälters 11, der aus einem Preform gemäß Fig. 1 streckgeblasen ist. Die stetige Vergrößerung der Wanddicke b des Preformbodens 3 bewirkt beim Streckblasprozess, dass der Behälterboden 13 eine Wanddicke besitzt, die gleich oder größer als eine Wanddicke des Behälterkörpers 12 ist. In dem vorliegenden Ausführungsbeispiel ist die Wanddicke insbesondere an dem Übergang von dem Behälterboden 13 in den Behälterkörper 12 größer als die Wanddicke des Behälterkörpers 12. Hierbei bildet besagter Übergang eine Standfläche, respektive petaloide Standfüße, des Behälters 11. Die vergrößerte Wanddicke am Übergang bewirkt bei den petaloiden Standfüssen 19 eine Dickstelle 20. Die Dickstelle 20 wird dabei etwa an derjenigen Stelle der Standfüsse 19 ausgebildet, welche bei der Herstellung des Kunststoffbehälters aus einem konventionellen Preform zu einer Dünnstelle (Bezugszeichen 20' in Fig. 6) führen würde.

Fig. 8 zeigt eine weitere Ausführungsvariante eines Kunststoffbehälters 11, der aus einem Preform gemäß Fig. 3 mit zwei konzentrischen ringförmig umlaufenden rückspringenden hinterschneidungsfreien Bereichen im Preformboden in einem Streckblasverfahren hergestellt ist. Der Kunststoffbehälter weist einen Behälterkörper 12 auf, dessen eines Längsende mit einem Behälterboden 13 verschlossen ist. An das andere Längsende des Behälterkörpers 12 schliesst ein Behälterhals 14 mit einer Öffnung 15 an. Infolge der am Preformboden 3 ausgebildeten zwei konzentrischen ringförmig umlaufenden rückspringenden hinterschneidungsfreien Bereichen 7, 7' werden am Behälterboden 13 zwei konzentrische ringförmig umlaufende Dünnstellen 17, 17' ausgebildet, die filmartige Scharniere bilden. Die Dicke der filmartigen Scharniere beträgt zwischen 0,15 mm und 1,5 mm. Zwischen den filmartigen Scharnieren erstrecken sich im Wesentlichen entlang einer Behältererstreckungsrichtung verlagerbare membranartige Teilbereiche 131 des Behälterbodens, die einen im geschlossenen Behälter 11 auftretenden Unterdruck bzw. auch Überdruck kompensieren können.

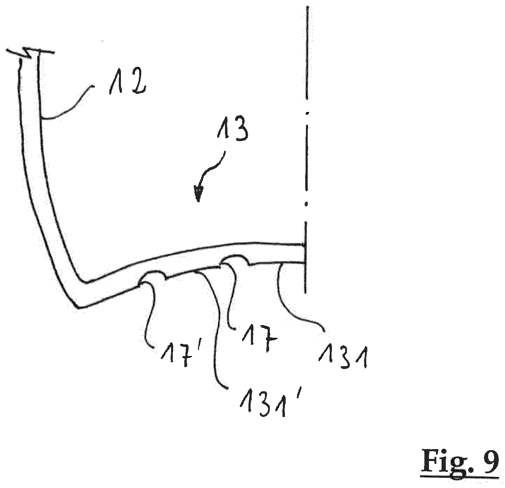

Fig. 9 zeigt eine Ausschnittsvergrösserung des in Fig. 8 dargestellten Behälterbodens 13 mit seinen filmartige Scharnieren 17, 17' und den membranartig ausgebildeten Teilbereichen 131, 131' des Behälterbodens 13.

## Patentansprüche

1. Preform zur Herstellung eines Kunststoffbehälters in einem Streckblasverfahren mit einem länglichen, röhrchenartigen Preformkörper (2), der an seinem einen Längsende mit einem Preformboden (3) verschlossen ist und dessen anderes Längsende an einen Übergangsbereich (25) angrenzt, an den ein Preformhals (4) anschließt, wobei der Preformboden (3) eine Außenwandung (31) und eine Innenwandung (32) aufweist, die eine Bodendicke (b) begrenzen, wobei der Preformkörper (2) eine Außenwandung (21) und eine Innenwandung (22) aufweist, die eine Wanddicke (w) begrenzen, wobei eine innere dreidimensional konvex gekrümmte Fläche (E2) und eine äußere dreidimensional konvex gekrümmte Fläche (E1) derart voneinander beabstandet sind, dass sich der Abstand von ihrem jeweiligen Scheitelpunkt (S, S') zu dem Preformkörper stetig vergrößert, wobei bei dreidimensional gekrümmten Flächen jede sich entlang der Ebene in beliebiger Richtung erstreckende Linie eine Kurve ist, **dadurch gekennzeichnet, dass** eine Erstreckung der Außenwandung (31) des Preformbodens (3) entlang der äußeren dreidimensional gekrümmten Fläche (E1) durch einen rückspringenden Bereich (7) außerhalb ihres Scheitelpunkts (S) unterbrochen ist, und/oder wobei eine Erstreckung der Innenwandung (32) des Preformbodens (3) entlang der inneren dreidimensional gekrümmten Fläche (E2) durch einen rückspringenden Bereich (7) außerhalb ihres Scheitelpunkts (S') unterbrochen ist.

2. Preform nach Anspruch 1, **dadurch gekennzeichnet, dass** der Preformboden (3) als eine flache Zerstreuungslinse ausgebildet ist, wobei die Zerstreuungslinse durch die Außenwandung (31) und die Innenwandung (32) des Preformbodens (3) begrenzt ist.

3. Preform nach Anspruch 1 oder 2, **dadurch gekennzeichnet, dass** die Wanddicke (w) von der Bodendicke (b) am Preformkörper (2) bis zum Übergangsbereich (25) stetig verkleinert ist.

4. Preform nach Anspruch 1 oder 2, **dadurch gekennzeichnet, dass** die Wanddicke (w) von der Bodendicke (b) am Preformkörper (2) bis zum Übergangsbereich (25) im Wesentlichen konstant ist.

5. Preform nach Anspruch 1 oder 2, **dadurch gekennzeichnet, dass** an den Preformboden ein erster Teilbereich (21) des Preformkörpers (2) angrenzt und ein zweiter Teilbereich (22) des Preformkörpers (2) an den ersten Teilbereich (21) und den Übergangsbereich (25) angrenzt, wobei die Wanddicke (w) des ersten Teilbereichs (21) von der Bodendicke (b) am Preformkörper (2) bis zum zweiten Teilbereich (22) stetig verkleinert ist und die Wanddicke (w) im zweiten Teilbereich (22) im Wesentlichen konstant ist und im Wesentlichen der Wanddicke (w) des ersten Teilbereichs (21) am Übergang zum zweiten Teilbereich (22) entspricht

6. Preform nach einem der vorhergehenden Ansprüche, **dadurch gekennzeichnet, dass** der eine gegenüber der Außenwandung (31) und/oder der Innenwandungwandung (32) des Preformbodens (3) rückspringende Bereich (7) hinterschneidungsfrei ist, wobei eine Wandstärke (b') des wenigstens einen rückspringenden hinterschneidungsfreien Bereichs (7) gegenüber der Bodendicke (b) eines an den hinterscheidungsfreien Bereich (7) angrenzenden Bereichs der Außenwandung (31) und/oder Innenwandung (32) verringert ist.

7. Preform nach nach Anspruch 6, **dadurch gekennzeichnet, dass** der rückspringende Bereich (7) eine Wandstärke (b') aufweist, die 0,7 mm bis 4 mm beträgt.

8. Preform nach Anspruch 6 oder 7, **dadurch gekennzeichnet, dass** der wenigstens eine rückspringende hinterschneidungsfreie Bereich (7) ringförmig, vorzugsweise kreisringförmig, ausgebildet ist.

9. Preform nach einem der Ansprüche 6 bis 8, **dadurch gekennzeichnet, dass** der Preformboden (3) mehrere rückspringende hinterschneidungsfreie Bereiche (7) aufweist, die wenigstens teilweise entlang eines geschlossenen Rings im Preformboden (3) angeordnet sind.

10. Preform einem der Ansprüche 6 bis 9, **dadurch gekennzeichnet, dass** der Preformboden (3) mehrere rückspringende hinterschneidungsfreie Bereiche (7) aufweist, und wenigstens einer der rückspringenden hinterschneidungsfreien Bereiche (7) ringförmig ausgebildet ist.

11. Preform nach Anspruch 10, **dadurch gekennzeichnet, dass** der Preformboden wenigstens zwei ringförmig ausgebildete rückspringende hinterschneidungsfreie Bereiche (7) aufweist, die konzentrisch im Preformboden (3) angeordnet sind.

12. Preform einem der Ansprüche 6 bis 11, **dadurch gekennzeichnet, dass** der Preformboden (3) wenigstens zwei rückspringende hinterschneidungsfreie Bereiche (7, 7') aufweist, die sternförmig angeordnet sind.

13. Preform nach einem der vorangehenden Ansprüche, **dadurch gekennzeichnet, dass** er nach einem Verfahren aus der Gruppe bestehend aus Spritzgiessen, Fliesspressen, Extrusionsblasen, und Spritzgiessen oder Fliesspressen oder Extrusionsblasen mit anschliessendem mechanischen Verformen des Preformbodens (3) hergestellt ist.

14. Preform nach einem der vorangehenden Ansprüche, **dadurch gekennzeichnet, dass** er ein- oder mehrschichtig ausgebildet ist und aus für das Streckblasverfahren geeigneten Kunststoffen gefertigt ist.

15. Preform nach Anspruch 14, **dadurch gekennzeichnet, dass** er Kunststoffe aus der Gruppe bestehend aus PET, PET-G, HDPE, PP, PS, PVC, PEN, Copolymeren der angeführten Kunststoffe, Biokunststoffen wie beispielsweise PLA, PEF oder PPF, gefüllten Kunststoffen, Kunststoffen mit einem oder mehreren Copolymer(en) und Mischungen der genannten Kunststoffe umfasst.

16. Preform nach einem der vorhergehenden Ansprüche, **dadurch gekennzeichnet, dass** der Preformboden (3) an einer vorbestimmten Stelle einen vorspringenden Bereich aufweist.

17. Verfahren zur Herstellung eines Kunststoffbehälter in einem Streckblasverfahren aus einem Preform (1) gemäss einem der vorangehenden Ansprüche.

## Claims

1. Preform for the production of a plastic container in a stretch-blow-molding method with an elongated, tube-like preform body (2), which is closed with a preform bottom (3) on one of its longitudinal ends and whose other longitudinal end adjoins a transition area (25), to which a preform neck (4) connects, whereby the preform bottom (3) has an outer wall (31) and an inner wall (32), which delimit a bottom thickness (b), whereby the preform body (2) has an outer wall (21) and an inner wall (22) that delimit a wall thickness (w), wherein an inner surface (E2) that is curved in a three-dimensionally convex manner and an outer surface (E1) that is curved in a three-dimensionally convex manner are spaced apart from one another in such a way that the distance from their respective apex (S, S') to the preform body continuously increases, wherein for a three-dimensionally curved surface any line extending along the plane in any direction being a curve. **characterized in that** an extension of the outer wall (31) of the preform bottom (3) along the outer three-dimensionally curved surface (E1) is interrupted by a set-back area (7) outside of the apex (S) thereof, and/or whereby an extension of the inner wall (32) of the preform bottom (3) along the inner three-dimensionally curved surface (E2) is interrupted by a set-back area (7) outside of the apex (S') thereof.

2. Preform according to Claim 1, **characterized in that** the preform bottom (3) is designed as a flat divergent lens, whereby the divergent lens is bound by the outer wall (31) and the inner wall (32) of the preform bottom (3).

3. Preform according to Claim 1 or 2, **characterized in that** the wall thickness (w) is continuously reduced from the bottom thickness (b) on the preform body (2) up to the transition area (25).

4. Preform according to Claim 1 or 2, **characterized in that** the wall thickness (w) is essentially constant from the bottom thickness (b) on the preform body (2) up to the transition area (25).

5. Preform according to Claim 1 or 2, **characterized in that** a first partial area (21) of the preform body (2) adjoins the preform bottom, and a second partial area (22) of the preform body (2) adjoins the first partial area (21) and the transition area (25), whereby the wall thickness (w) of the first partial area (21) is continuously reduced from the bottom thickness (b) in the preform body (2) up to the second partial area (22), and the wall thickness (w) in the second partial area (22) is essentially constant and essentially corresponds to the wall thickness (w) of the first partial area (21) in the transition to the second partial area (22).

6. Preform according to one of the preceding claims, **characterized in that** the area (7) that is set back compared to the outer wall (31) and/or the inner wall (32) of the preform bottom (3) has no undercuts, whereby a wall thickness (b') of the at least one set-back area (7) without undercuts is reduced compared to the bottom thickness (b) of an area of the outer wall (31) and/or inner wall (32) that adjoins the area (7) without undercuts.

7. Preform according to Claim 6, **characterized in that** the set-back area (7) has a wall thickness (b') that is 0.7 mm to 4 mm.

8. Preform according to Claim 6 or 7, **characterized in that** the at least one set-back area (7) without undercuts is designed in an annular, preferably circular, manner.

9. Preform according to one of Claims 6 to 8, **characterized in that** the preform bottom (3) has multiple set-back areas (7) without undercuts, which areas are arranged at least partially along a closed ring in the preform bottom (3).

10. Preform [according to] one of Claims 6 to 9, **characterized in that** the preform bottom (3) has multiple set-back areas (7) without undercuts, and at least one of the set-back areas (7) without undercuts is designed in an annular manner.

11. Preform according to Claim 10, **characterized in that** the preform bottom has at least two set-back areas (7) without undercuts that are designed in an annular manner and that are arranged concentrically in the preform bottom (3).

12. Preform [according to] one of Claims 6 to 11, **characterized in that** the preform bottom (3) has at least two set-back areas (7, 7') without undercuts, which areas are arranged in a starshaped manner.

13. Preform according to one of the preceding claims, **characterized in that** it is produced according to a method from the group that consists of injection molding, impact extrusion, extrusion blow molding, and injection molding or impact extrusion or extrusion blow molding with subsequent mechanical deformation of the preform bottom (3).

14. Preform according to one of the preceding claims, **characterized in that** it is designed in one or more layers and is manufactured from plastics that are suitable for the stretch-blow-molding method.

15. Preform according to Claim 14, **characterized in that** it comprises plastics from the group that consists of PET, PET-G, HDPE, PP, PS, PVC, PEN, copolymers of the cited plastics, bioplastics, such as, for example, PLA, PEF or PPF, filled plastics, plastics with one or more copolymer(s) and mixtures of the above-mentioned plastics.

16. Preform according to one of the preceding claims, **characterized in that** the preform bottom (3) has a projecting area at a predetermined spot.

17. Method for producing a plastic container in a stretch-blow-molding method from a preform (1) according to one of the preceding claims.

## Revendications

1. Préforme pour la fabrication d'un récipient en matériau synthétique selon un procédé d'étirage-soufflage comprenant un corps de préforme (2) allongé en forme de tube qui est fermé par un fond de préforme (3) à l'une de ses extrémités longitudinales et dont l'autre extrémité longitudinale jouxte une zone de transition (25) à laquelle se raccorde un col de préforme (4), le fond de préforme (3) présentant une paroi extérieure (31) et une paroi intérieure (32) qui délimitent une épaisseur de fond (b), le corps de préforme (2) présentant une paroi extérieure (21) et une paroi intérieure (22) qui délimitent une épaisseur de paroi (w), une surface intérieure (E2) à courbure convexe tridimensionnelle et une surface extérieure (E1) à courbure convexe tridimensionnelle étant espacées l'une de l'autre de manière à ce que la distance de leur sommet (S, S') respectif par rapport au corps de préforme augmente en continu, sachant qu'avec des surfaces à courbure tridimensionnelle, chaque ligne s'étendant dans n'importe quelle direction le long du plan est une courbe, **caractérisée en ce qu'**une partie de la paroi extérieure (31) du fond de préforme (3) qui s'étend le long de la surface extérieure (E1) à courbure tridimensionnelle est interrompue par une zone en retrait (7), à l'extérieur de son sommet (S), et/ou une partie de la paroi intérieure (32) du fond de préforme (3) qui s'étend le long de la surface intérieure (E2) à courbure tridimensionnelle est interrompue par une zone en retrait (7), à l'extérieur de son sommet (S').

2. Préforme selon la revendication 1, **caractérisée en ce que** le fond de préforme (3) est réalisé sous la forme d'une lentille divergente plate, la lentille divergente étant délimitée par la paroi extérieure (31) et la paroi intérieure (32) du fond de préforme (3).

3. Préforme selon la revendication 1 ou 2, **caractérisée en ce que** l'épaisseur de paroi (w) diminue en continu à partir de l'épaisseur de fond (b) du corps de préforme (2), jusqu'à la zone de transition (25).

4. Préforme selon la revendication 1 ou 2, **caractérisée en ce que** l'épaisseur de paroi (w) est sensiblement constante à partir de l'épaisseur de fond (b) du corps de préforme (2), jusqu'à la zone de transition (25).

5. Préforme selon la revendication 1 ou 2, **caractérisée en ce qu'**une première portion (21) du corps de préforme (2) se raccorde au fond de préforme, et une deuxième portion (22) du corps de préforme (2) se raccorde à la première portion (21) et à la zone de transition (25), l'épaisseur de paroi (w) de la première portion (21) diminuant en continu à partir de l'épaisseur de fond (b) du corps de préforme (2), jusqu'à la deuxième portion (22), et l'épaisseur de paroi (w) étant sensiblement constante dans la deuxième portion (22) et correspondant sensiblement à l'épaisseur de paroi (w) de la première portion (21), à l'emplacement de la transition vers la deuxième portion (22).

6. Préforme selon l'une des revendications précédentes, **caractérisée en ce que** la zone (7) qui est en retrait par rapport à la paroi extérieure (31) et/ou la paroi intérieure (32) du fond de préforme (3) ne comporte pas de contre-dépouille, sachant qu'une épaisseur de paroi (b') de la zone en retrait (7), au nombre d'au moins une, dépourvue de contre-dépouille, est réduite par rapport à l'épaisseur de fond (b) d'une partie de la paroi extérieure (31) et/ou de la paroi intérieure (32) adjacente à la zone (7) dépourvue de contre-dépouille.

7. Préforme selon la revendication 6, **caractérisée en ce que** la zone en retrait (7) présente une épaisseur de paroi (b') qui est comprise entre 0,7 mm et 4 mm.

8. Préforme selon la revendication 6 ou 7, **caractérisée en ce que** la zone en retrait (7), au nombre d'au moins une, dépourvue de contre-dépouille, est réalisée sous une forme annulaire, de préférence sous une forme circulaire.

9. Préforme selon l'une des revendications 6 à 8, **caractérisée en ce que** le fond de préforme (3) présente plusieurs zones en retrait (7) dépourvues de contre-dépouilles, qui sont disposées au moins en partie le long d'un anneau fermé dans le fond de préforme (3).

10. Préforme selon l'une des revendications 6 à 9, **caractérisée en ce que** le fond de préforme (3) présente plusieurs zones en retrait (7) dépourvues de contre-dépouilles et qu'au moins une des zones en retrait (7) dépourvues de contre-dépouilles est réalisée sous une forme annulaire.

11. Préforme selon la revendication 10, **caractérisée en ce que** le fond de préforme présente au moins deux zones en retrait (7) dépourvues de contre-dépouilles, qui sont réalisées sous une forme annulaire et sont disposées de façon concentrique dans le fond de préforme (3).

12. Préforme selon l'une des revendications 6 à 11, **caractérisée en ce que** le fond de préforme (3) présente au moins deux zones en retrait (7, 7') dépourvues de contre-dépouilles, qui sont disposées en forme d'étoile.

13. Préforme selon l'une des revendications précédentes, **caractérisée en ce qu'**elle est fabriquée selon l'un des procédés du groupe comprenant le moulage par injection, le formage par fluage, l'extrusion-soufflage, et le moulage par injection ou le formage par fluage ou l'extrusion-soufflage, avec mise en forme mécanique subséquente du fond de préforme (3).

14. Préforme selon l'une des revendications précédentes, **caractérisée en ce qu'**elle est réalisée en une ou plusieurs couches et est fabriquée à partir de matières synthétiques adaptées au procédé d'étirage-soufflage.

15. Préforme selon la revendication 14, **caractérisée en ce qu'**elle comprend des matières synthétiques du groupe comprenant PET, PETG, PEH

16. Préforme selon l'une des revendications précédentes, **caractérisée en ce que** le fond de préforme (3) présente une zone en saillie, à un emplacement prédéfini.

17. Procédé de fabrication d'un récipient en matière plastique selon un procédé d'étirage-soufflage à partir d'une préforme (1) selon l'une des revendications précédentes.
